Europäisches Patentamt

European Patent Office

Office européen des brevets

(19)

(11) Veröffentlichungsnummer : **0 143 861**
**B1**

(12) # EUROPÄISCHE PATENTSCHRIFT

(45) Veröffentlichungstag der Patentschrift :
**11.10.89**

(21) Anmeldenummer : **83112104.1**

(22) Anmeldetag : **01.12.83**

(51) Int. Cl.⁴ : **B 62 D 7/14**, B 62 D 9/00,
B 62 D 7/02

(54) **Fahrzeug mit lenkbaren Rädern.**

(43) Veröffentlichungstag der Anmeldung :
**12.06.85 Patentblatt 85/24**

(45) Bekanntmachung des Hinweises auf die Patenterteilung : **11.10.89 Patentblatt 89/41**

(84) Benannte Vertragsstaaten :
**BE CH DE FR GB IT LI SE**

(56) Entgegenhaltungen :
EP--A-- 0 002 333
DE--A-- 1 104 362
DE--A-- 2 441 995
DE--A-- 2 600 301
FR--A-- 1 180 042
FR--A-- 1 269 261
FR--A-- 2 208 370
FR--A-- 2 507 989
GB--A-- 1 095 550
US--A-- 2 699 954
US--A-- 3 235 283

(73) Patentinhaber : **Kramer-Werke GmbH**

**D-7770 Überlingen (DE)**

(72) Erfinder : **Friedrich, Karl**
**Gräfin-Hildegard-Strasse 17**
**D-7776 Sipplingen (DE)**
Erfinder : **Maly, Dieter**
**Kesselbachstrasse 1a**
**D-7770 Überlingen (DE)**

(74) Vertreter : **Grättinger, Günter**
**Patentanwalt Almeidaweg 35 Postfach 16 49**
**D-8130 Starnberg (DE)**

## Beschreibung

Die Erfindung bezieht sich auf ein Fahrzeug mit lenkbaren Rädern nach dem Oberbegriff des Anspruchs 1.

Insbesondere für Arbeitsfahrzeuge ist eine gute Manövrierfähigkeit wichtig. Die hierzu erforderlichen hohen Lenkeinschläge schaffen Probleme, insbesondere hinsichtlich des Lenkprogramms. Bei hohen Lenkeinschlägen sollen sich die Räder tangential zum Wenderadius stellen, also in Abhängigkeit davon, of Innen- oder Außenrad, stärker oder weniger stark einschlagen. In der Praxis hat sich eine Lenkeinschlaggrenze von ca. ± 60° ergeben, wenn auch die Forderung von ± 90° schon erhoben wurde.

Es ist ein Arbeitsfahrzeug mit Vierradlenkung bekannt (DE-GM 1 939 475), bei dem unabhängig abschaltbare Lenksysteme für die Vorderräder einerseits und die Hinterräder andererseits existieren, die wahlweise abgeschaltet werden können und außerdem wahlweise miteinander für Kreislenkung, also vorne und hinten gegensinnig, oder für Schrägfahrt-Parallellenkung, nämlich den sogenannten « Hundegang », also vorne und hinten gleichsinnig, gekoppelt werden können. Über die praktische Ausführung dieser Kopplungen und Systeme gibt die Vorveröffentlichung keinen Aufschluß.

Es ist auch eine hydraulische Servolenkung für Schwerlastfahrzeuge bekannt (DE-OS 24 41 995), die zur Erzielung einer exakten Lenkgeometrie bei Radeinschlagwinkeln bis 90° und mehr Steuerkurven aufweist, und zwar unterschiedliche Steuerkurven einerseits für Kreislenkung und andererseits für gleiche Radeinschlagwinkel bei geradlinigem Schrägfahren. Der bauliche Aufwand einer solchen Servolenkung mit unterschiedlichen Steuerungen ist indessen verhältnismäßig hoch und für ein Kleinfahrzeug, insbesondere für ein Klein-Arbeitsfahrzeug, unzweckmäßig.

Weiterhin ist eine Fahrzeuglenkung bekannt (DE-OS 26 00 301), bei der zur Erzielung eines Radeinschlags bis etwa 90° und entsprechend an die kleinen Wenderadien angepaßter Winkelbeziehung der auf der gleichen Achse sitzenden Räder die beiderseitigen Lenkhebel über eine Spurstange· verbunden sind, die am einen der Lenkhebel über einen Zwischenhebel angreift, der bewirkt, daß sich bei der Verschwenkung der Lenkhebel um ihre zugehörigen Achsen eine unterschiedliche Verdrehung der vertikalen Radaufhängachsen und der Fahrzeugräder ergibt. Diese unterschiedliche Verdrehung führt jedoch für die verschiedenen Lenkeinschläge noch zu unterschiedlichen und teilweise zu hohen Lenkfehlern und hat eine unerwünschte Komplexität der Konstruktion zur Folge, die auch wegen ihres Raumbedarfs oberhalb der Achsen speziell für Klein-Arbeitsfahrzeuge unerwünscht ist. Eine Parallellenkung für eine Schrägfahrt des Fahrzeugs ist andererseits überhaupt nicht möglich.

Eine weitere bekannte Fahrzeuglenkung (EP-A 0 002 333) umfaßt zwei, jeweils einem Rad zugeordnete Steuerhebel, welche an einem Ende raumfest drehbar gelagert sind und welche an dem anderen Ende mittels einer Spurstange miteinander verbunden sind. Ein Zwischenlenker verbindet den Steuerhebel mit dem um eine senkrechte Achse drehbaren Körper, welcher das Rad führt. Durch die besondere Geometrie der Steuerhebel und Zwischenlenker ist mit dieser Konstruktion ein großer Verschwenkwinkel der Räder möglich, wodurch entsprechend ausgerüstete Fahrzeuge einen kleinen Wenderadius besitzen. Ein Parallelverschwenken der Räder ist mit dieser Ausführungsform jedoch nicht möglich.

Der vorliegenden Erfindung liegt die Aufgabe zugrunde, eine Lenkeinrichtung für Fahrzeuge zu schaffen, die den Fahrzeugen eine gute Manövrierfähigkeit verleiht. Insbesondere soll eine Lenkeinrichtung geschaffen werden, bei welcher der Fahrzeugführer zwischen zwei Lenkprogrammen, nämlich einem Lenkprogramm für Kreisfahrt und einem Lenkprogramm für Querfahrt wählen kann.

Diese Aufgabe wird erfindungsgemäß durch die im Anspruch 1 beschriebenen Merkmale gelöst. Durch die Ausrüstung jedes einer Achse zugeordneten Räderpaares mit zwei Paaren von Spurarmen, welche durch zwei Spurstangen, die wechselseitig aktivierbar bzw. desaktivierbar sind, verbunden sind, können die Räder unter Ausnutzung der unterschiedlichen Geometrie einerseits zum Erzeugen eine kreisfahrt (z. B. gemäß EP-A 0 002 333) und andererseits zum Erzeugen einer Querfahrt verschwenkt werden.

Der für eine gute Manövrierfähigkeit erwünschte kleine Wendekreis bei Wahl des Lenkprogrammes « Kreisfahrt » ergibt sich durch die Tatsache, daß bei der gekennzeichneten Beziehung die Lenkhebel, ausgehend von ihrer Stellung für Geradeausfahrt, bei der Auslenkung Kreisbögen überstreichen, die durch die Spurstange zwar aufeinander bezogen sind, jedoch unterschiedliche Bogenwinkel besitzen, da die durch die Spurstange bewirkte Verschiebungsweite des Anlenkpunkts hauptsächlich die Cosinuskomponente des Kreisbogens betrifft. Anders ausgedrückt, liegt die Geradeaus-Mittelstellung der Anlenkpunkte auf ihren Hebel-Kreisbahnen beispielsweise in denjenigen Quadranten, die in Fahrtrichtung gesehen vor der Achse zum Fahrzeug-Seitenrand hin gelegen sind. Bei einer Lenkung nach rechts nähert sich, wenn die Verdrehungsrichtungen von Lenkhebeln und Rädern gleichsinnig sind, der Anlenkpunkt am linken Lenkhebel dem der Fahrzeuglängsrichtung parallelen Durchmesser, die zurückgelegte Umfangsbewegung ist also nahezu gleich der Verschiebungsbewegung der Spurstange. Der Anlenkpunkt am rechten Lenkhebel nähert sich indessen dem mit der betreffenden Fahrzeugachse zusammenfallenden Kreisdurchmesser, die Kreisbahnkomponente in Bewegungsrichtung der Spurstange ist also relativ klein, oder umgekehrt ausgedrückt, der zum Erreichen der erforderlichen Verschiebung zu durchmessende Winkel ist deutlich größer als der Verdrehungswinkel des linken Lenkhebels. Bei einer Lenkung nach links ergeben sich die umgekehrten Bewegungsrelationen. Durch diese Ausnützung unterschiedlicher Bogenlängen, ausgehend von demjenigen Verdrehungsquadranten, von dem aus die Verbindungslinien der Anlenklager mit den Drehachsen zur Fahrzeugmitte zu konvergieren, ergibt sich ohne weitere Maßnahmen das Kreislenkungsverhalten auch für sehr hohe Lenkeinschläge bis zu 90°. Insbesondere bei Vierradlenkung ist die Geometrie der Lenksysteme so auslegbar, daß sich die verlängerten Drehachsen aller vier Räder in einem Punkt schneiden, was zu einer leichtgängigen universellen Manövrierbarkeit des Fahrzeugs führt.

Erfindungsgemäß ist alternativ zum Lenkprogramm « Kreisfahrt » auch ein anderes Lenkprogramm wählbar, gemäß dem die Lenkrichtungen der Lenkräder, vorzugsweise aller vier Fahrzeugräder, stets parallel stehen, so daß das Fahrzeug in beliebiger Schrägrichtung versetzt und bei extremem Lenkeinschlag im rechten Winkel zur Geradeaus-Fahrtrichtung verfahren werden kann. Der Ort des zweiten Paars von Anlenklagern ist so gewählt, daß die beiderseitigen Verdrehbewegungen der Lenkhebel beiderseits gleiche Radeinschlagwinkel zur Folge haben.

Sofern zwischen den Lenkhebeln und den Radstützen eine winkellineare Drehübersetzung herrscht, beispielsweise über ein Zahnradgetriebe, entspricht der Abstand zwischen den Anlenkpunkten dem Abstand zwischen den Drehhebeln, so daß eine reine Parallelogrammverstellung erfolgt. Ist andererseits deise Drehübersetzung unlinear, beispielsweise unter Verwendung einer Schwinge, so muß die entsprechende Unlinearität wiederum durch unterschiedliche Kreisbogenlängen komponsiert werden, um die Parallelität der Radeinschlagstellungen aufrechtzuerhalten. Die Umschaltung zwischen der Kreislenkung und der Schrägfahrtlenkung erfolgt zweckmäßigerweise in der Geradeausstellung, also derjenigen Stellung, die diese beiden Programme übereinstimmend haben. In der Schrägstellung, zumindest bei völliger Querfahrt, ist eine gewisse Lenkung dadurch möglich, daß die Räder der Vorderachse und die Räder der Hinterachse unterschiedlich angetrieben werden, also nach Art eines antriebsgelenkten Fahrzeugs. Unter Vermeidung eines Wendegetriebes wird bevorzugt eine der Achsen angetrieben und die andere bis zum Stillstand abgebremst, nachdem der Allradantrieb abgeschaltet wurde. Dieses Lenkprogramm erfordert also keine wesentliche konstruktive Erweiterung. Die Maßnahmen nach den Ansprüchen 2 bis 4 betreffen die Wahl des Lenkprogramms. Erfindungsgemäß existieren zwei an jeweiligen Anlenkpunkten angelenkte Spurstangen zwischen den beiden Lenkhebeln jeder Lenkachse, von denen jeweils eine zu einer starren Verbindung gemacht wird und die andere « weich » oder flexibel bleibt. Nach Anspruch 2 werden zwei Spurstangenzylinder verwendet, von denen einer mit maximalem Druck beaufschlagt und der andere drucklos gelassen werden kann. Je nach Wahl des mit Druck beaufschlagten Spurstangenzylinders lenkt das Lenksystem für Kreisfahrt oder für Schrägfahrt. Zur Sicherung und zur Entlastung der Hydraulik kann eine lösbare Verriegelung der Kolbenstangen in den jeweils aktivierten Stellungen zweckmäßig sein. Werden beide Spurstangenzylinder eines Lenkhebelpaars in der entsprechenden Stellung verriegelt, so sind beide Räder starr auf Geradeausfahrt eingestellt ; dies kann beispielsweise für die Hinterachse bei Straßenfahrt zweckmäßig sein, während die Vorderachse auf Kreislenkung eingestellt ist. Gegenüber der konstruktiv etwas aufwendigen Lösung nach Anspruch 2 bieten die Maßnahmen nach den Ansprüchen 3 und 4 einfachere Konstruktionen, bei denen Spurstangenzylinder eingesetzt sind, die durch hydraulische Steuerung mechanisch verriegelt oder entriegelt werden. Vorzugsweise sitzen die lenkbaren Räder gemäß Anspruch 10 paarweise auf Achskörpern, was die Stabilität des Fahrzeugs erheblich verbessert. Die Maßnahme nach Anspruch 6 hat eine vorteilhafte Konstruktion mit günstigem Kompromiß zwischen den Erfordernissen der Bodenfreiheit und des niedrigen Fahrzeugschwerpunkts zur Folge. Gemäß Anspruch 7 sind die Lenkhebel mit Armsternen versehen, wobei an einem der Arme der Lenkantrieb in Form eines hydraulischen Linearmotors oder eines Gestänges wie einer Spurstange, die beispielsweise von einer anderen Achse herübergeführt ist, angreift. Die Beziehung der Lenkantriebe einerseits der Vorderachse und andererseits der Hinterachse ist insofern zu beachten, als bei Vierrad-Kreislenkung die Lenkeinschläge einerseits der Vorderräder und andererseits der Hinterräder gegenläufig erfolgen, während sie bei Schrägfahrtlenkung parallel, also gleichsinnig erfolgen. Die entsprechende Antriebsrichtung ist im Fall jeweiliger hydraulischer Linearmotoren leicht selektiv einstellbar. Die Linearmotoren sind dabei hydraulisch ausgeglichen hintereinander zu schalten und weisen in ihren jeweiligen Endstellungen einen Synchronisier-Überlauf für das Hydraulikmedium auf.

Die Maßnahmen nach den Ansprüchen 8 und 9 dienen dazu, die Lenkungsbauteile ausreichend klein dimensionieren zu können, um an einem zwischen den Rädern liegenden Achskörper das Lenksystem für die extrem weiten Lenkeinschläge räumlich unterzubringen.

Weitere Einzelheiten, Vorteile und Weiterbildungen ergeben sich aus der folgenden Beschreibung bevorzugter Ausführungsbeispiele unter Bezugnahme auf die Zeichnung. Es zeigen :

Fig. 1 schematische Grundrisse von Fahrzeugen in verschiedenen Lenkstellungen des Kreislenkprogramms ;

Fig. 2 schematische Grundrisse von Fahrzeugen in verschiedenen Lenkstellungen des Schrägfahrtprogramms ;

Fig. 3 eine Draufsicht auf das Lenksystem einer Achse für Kreislenkung ;

Fig. 4 eine Draufsicht aud das Lenksystem einer Achse für wahlweise Kreislenkung oder Schrägfahrtlenkung ;

Fig. 5 eine Schnitt durch einen Teil eines Spurstangenzylinders ;

Fig. 6 einen Schnitt entsprechen Fig. 5 durch einen abgewandelten Spurstangenzylinder ;

Fig. 7 eine Vorderansicht einer Lenkachse ;

Fig. 8 eine Seitenansicht der Lenkachse nach Fig. 6 in Querrichtung auf die Radstellungen für Querfahrt ;

Fig. 9 eine schematische Draufsicht auf verschiedene Lenkstellungen des Lenksystems bei Kreislenkung ;

Fig. 10 eine Draufsicht auf verschiedene Lenkstellungen des Lenksystems bei Schrägfahrtlen-kung ;

Fig. 11 ein Schema eines hydraulischen Lenkantriebs.

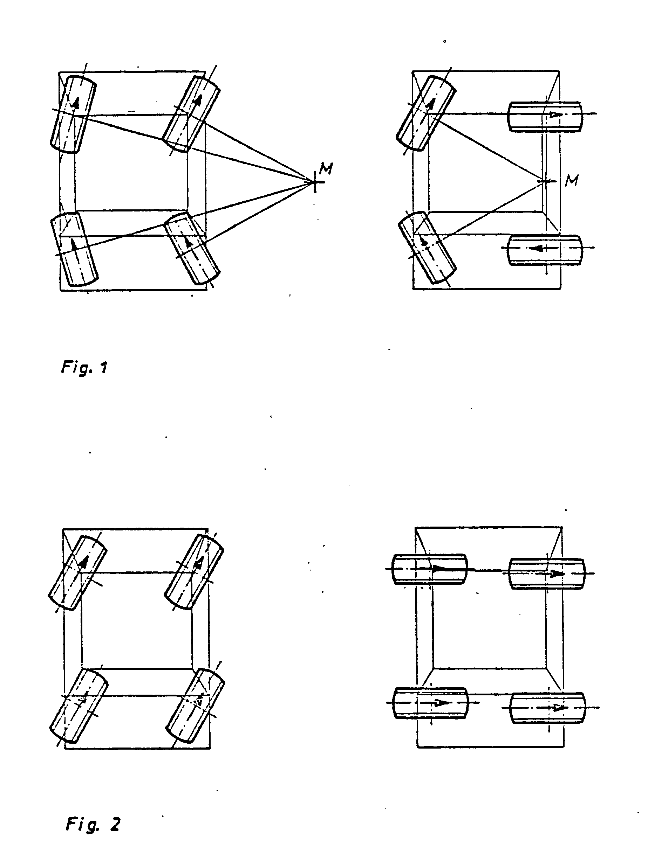

Fig. 1 zeigt schematisch den Grundriß eines Fahrzeugs mit Rädern, die in eine Lenkstellung für eine Kreisfaht um einen Mittelpunkt M eingeschlagen sind. In der in Fig. 1 rechts gezeigten Extremstellung liegt der Dreh-Mittelpunkt M auf der hierbei mit den Radachsen zusammenfallenden Verbindungslinien zwischen dem rechten Vorderrad und dem rechten Hinterrad. Die Antriebsrichtungen der einzelnen Räder sind durch Pfeile angedeutet. Ersichtlich erfolgt der Lenkeinschlag der Räder keineswegs parallel, sondern für Vorderräder und Hinterräder gegensinnig und außerdem für die kurveninneren Räder stärker als für die kurvenäußeren Räder.

Fig. 2 veranschaulicht ein Querfahrtprogramm, gemäß dem das Fahrzeug in jeder beliebigen Richtung schräg versetzt werden kann. Die Räder stehen in jeder Lenkstellung parallel zueinander. Bei der in Fig. 2 rechts dargestellten extremen Lenkstellung wird das Fahrzeug in Querrichtung, also im rechten Winkel zur Geradeausrichtung, versetzt.

Die Lenkprogramme nach Figuren 1 und 2, also das Kreislenkprogramm und das Querfahrtprogramm, werden zweckmäßigerweise von der gleichen Lenk-Handhabe aus gesteuert, jedoch sind unterschiedliche kinematische Lenkantriebsübertragungen auf die Räder erforderlich. Die beiden Programme stimmen nur in der (in Fig. 1 und 2 nicht eingezeichneten) Stellung für Geradeausfahrt überein.

Für die Straßenfahrt können auch die Räder der Hinterachse geradegestellt werden und nur die Räder der Vorderachse betätigt werden. Zweckmäßigerweise wird für die Räder der Vorderachse dann das Kreislenkprogramm vorgesehen.

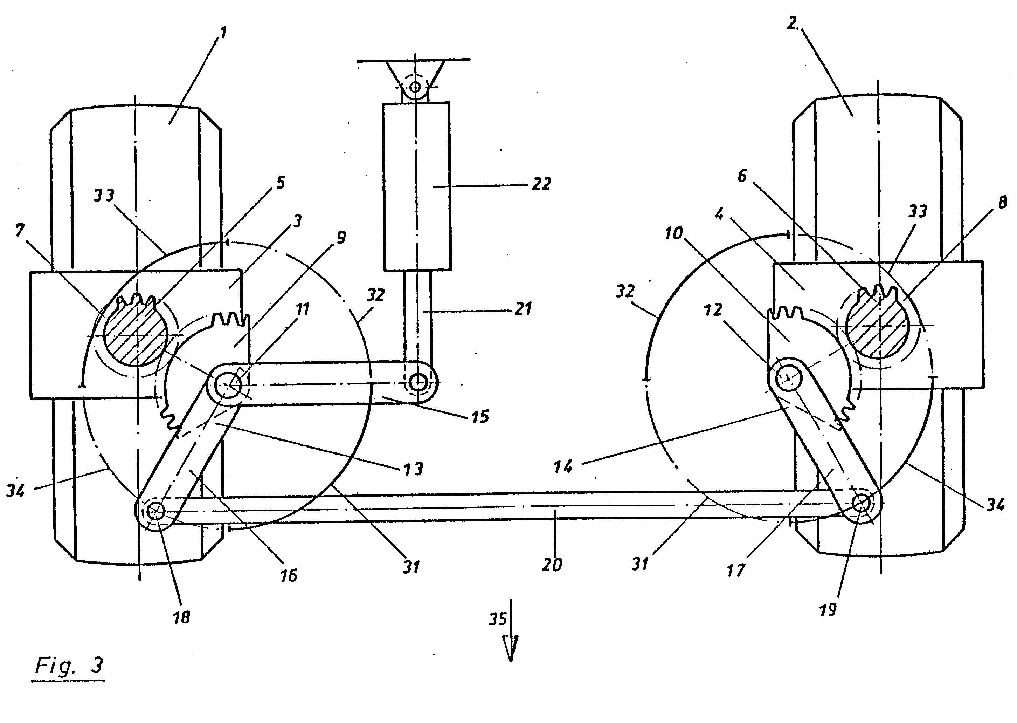

Fig. 3 zeigt eine Lenkachse zur Erzielung des Kreislenkprogramms nach Fig. 1. Mit dieser bekannten Lenkeinrichtung ist jedoch ein Umschalten auf das Lenkprogramm « Querfahrt », wie es die erfindungsgemäße Lenkeinrichtung gestattet, nicht möglich. Fig. 3 stellt somit lediglich eine technische Möglichkeit dar, wie ein Kreislenkprogramm verwirklicht werden kann.

Fig. 3 zeigt in schematischer Draufsicht zwei lenkbare Räder 1 und 2, die bei diesem Beispiel mit Einzelradaufhängung an Radgabeln 3 bzw. 4 sitzen, welche an in der Zeichnung nicht dargestellten, mit dem Fahrzeugrahmen verbundenen Lagerbauteilen so gelagert sind, daß sie um ihre vertikale Achse, die den vertikalen Raddurchmesser enthält, verdrehbar sind. Hierdurch lassen sich die Räder 1 und 2 in beliebige Lenkstellungen einstellen. Die Radgabeln 3 und 4 bestehen in ihrem oberen Teil jeweils aus einer Radstütze 5 bzw. 6, auf der ein drehfest mit ihr verbundenes Lenkritzel 7 bzw. 8 sitzt. Mit den Lenkritzeln 7 und 8 kämmt jeweils ein sektorenförmig ausgeschnittenes Zahnrad 9 bzw. 10 von etwa zwei- bis dreifachem Radius, der Verdrehungswinkel wird also zwei- bis dreifach übersetzt, wobei der Drehsinn gewendet wird. Die Zahnräder 9 und 10 sind auf eine Lenkhebelwelle 11 bzw. 12 eines Lenkhebels 13 bzw. 14 aufgekeilt. Der Lenkhebel 13 weist außer seiner Lenkhebelwelle 11 einen Lenkantriebsarm 15 und einen Spurarm 16 auf. Der Lenkhebel 14 ist nur mit einem Spurarm 17 versehen. Am Ende des Spurarms 16 sitzt ein Anlenklager 18 und am Ende des Spurarms 17 ein Anlenklager 19, an denen jeweils mit einem ihrer Enden eine Spurstange 20 angelenkt ist. Am Lenkantriebsarm 15 ist eine Kolbenstange 21 angelenkt, die zu einem mit seinem hinteren Ende verschwenkbar montierten hydraulischen Linearmotor 22, also einer Kolben-Zylinder-Einheit, gehört. Durch die Verstellung des Kolbens im hydraulischen Linearmotor 22 wird eine Verdrehung des Zahnrads 9 und, über die Spurstange 20, auch des Zahnrads 10 bewirkt. Diese Verdrehung wird übersetzt auf die Räder 1 und 2 als Lenkver-schwenkung übertragen. Für eine Verschwen-kung der Räder 1 und 2 um ± 90° aus der Geradeausfahrt-Stellung heraus müssen die Zahnräder 9 und 10 beispielsweise nur um ± 30° bis ± 45° verdreht werden, so daß der am Lenkantriebsarm 15 in der Geradeausfahrtrichtung tangential angreifende Lenkantrieb nicht in die Nähe der Totpunkte kommt.

Die Anlenklager 18 und 19 bewegen sich auf Bögen von Kreisen, die aus Quadranten 31, 32, 33 und 34 bestehen. Die Zählung der Quadranten ist für die beiden Lenkhebel 13 und 14 entgegenge-setzt gerichtet, wobei die Quadranten 31 der Fahrzeugmitte 35 zugewandt sind, die Quadranten 32 der Fahrzeug-Längsache zugewandt, jedoch der Fahrzeugmitte 35 abgewandt sind, die Quadranten 33 der Fahrzeug-Längsachse und der Fahrzeugmitte 35 abgewandt sind und die Quadranten 34 der Fahrzeug-Längsachse abgewandt sind, jedoch der Fahrzeugmitte 35 näher als die Quadranten 33 liegen. In der Geradeausstellung liegen die Anlenklager 18 und 19 im jeweiligen Quadranten 34. Wird nun der Lenkhebel 13 zur Ausführung einer Linkskurve wegen der Drehsinnwendung nach rechts verdreht, also die Kombenstange 21 ausgeschoben, so bewegt sich das Anlenklager 18 entlang einem Bogen, der sich dem Quadranten 33 nähert. Nach Überschreiten des Quadranten-Übergangspunkts würde, wenn die Verdrehung soweit erfolgen würde, das Anlenklager 18 einen Totpunkt erreichen, an dem der Spurarm 16 und die Spurstange 20 auf einer gemeinsamen Linie liegen und nach dessen Überschreiten die Spurstange 20 wieder zurückgeschoben würde. Dieser Totpunkt liegt indessen außerhalb des Arbeitsbereichs der Lenkung. Es ist jedoch ersichtlich, daß schon bei seiner Annäherung die auf das Anlenklager 18 ausgeübte Verschiebung in Richtung der Spurstange 20, bezogen auf den Verdrehungswinkel des Spurarms 16, kleiner wird. Dies wirkt sich so aus, daß bei der eingesteuerten Linkskurve das kurveninnere Rad 1 stärker verschwenkt und das kurvenäußere Rad 2 weniger stark verschwenkt wird.

Wird andererseits nach rechts gelenkt, also die Kolbenstange 21 eingezogen, so legt die Spurstange 20 mit dem Anlenklager 18 einen Weg zurück, der nahezu gleich dem durchmessenen Bogenumfang auf dem Weg vom Quadranten 34 zum Quadranten 31 ist. Um diesem Weg folgen zu können, muß das sich entlang dem Quadranten 34 bewegende Anlenklager 19 einen größeren Verdrehungswinkel durchmessen, wodurch das nun kurveninnere Rad 2 stärker eingeschlagen wird als das kurvenäußere Rad 1.

Der gleiche Effekt ließe sich auch erzielen, wenn die Anlenklager 18 und 19 in der Geradeausstellung nicht im Quadranten 34, sondern im Quadranten 32 liegen würden. Würde das Lenkgetriebe 9/7 bzw. 10/8 den Verdrehungssinn nicht werden, so wären die zutreffenden Quadranten die Quadranten 31, 33.

Wie Fig. 1 zeigt, sind bei Vierradlenkung die Lenkeinschläge einerseits der Vorderräder und andererseits der Hinterräder in dem Sinne unterschiedlich, daß das kurveninnere Rad einen stärkeren Einschlag aufweist als das kurvenäußere. Bei der Kreislenkung, für die das Lenksystem nach Fig. 3 wirksam ist, erfolgt jedoch die Lenkung für die Hinterräder gegenläufig im Vergleich zu der für die Vorderräder, wenn also die Vorderräder nach rechts lenken, lenken die Hinterräder nach links. Die Situation ist also bei den Hinterrädern spiegelbildlich zur Situation bei den Vorderrädern. Das angestrebte Betriebsverhalten für die Vierradlenkung ergibt sich kann, wenn der Abstand zwischen den Drehachsen der Lenkhebelwellen 11 und 12 und der Abstand zwischen den Anlenklagern 18 und 19 unterschiedlich ist und die Längsachsen der Spurarme 16 und 17 in der zur Fahrzeugmitte 35 weisenden Richtung bei drehrichtungswendender Übersetzung divergieren und bei nicht drehrichtungswendender Übersetzung konvergieren. Die genaue Dimensionierung, einschließlich der Festlegung des Orts der Anlenklager 18 und 19 auf den Quadranten 34 oder 32 für Geradeausfahrt, ist unter Berücksichtigung der gesamten Dimensionierung, also des Abstands der Lenkhebelwellen 11 und 12 voneinander, der Länge der Anlenkarme 16 und 17, der Übersetzung zwischen den Zahnrädern 9/7 und 10/8 des Radstands, der Spurweite, des Lenkrollradius und des geforderten Einschlagwinkels der Räder 1 und 2 nach bekanntem Regeln (Bussin: Automobiltechnisches Handbuch, 18. Aufl., 2. Bd., Techn. Verlag Herbert Cramm, Berlin 1965) zu bestimmen.

Soll die Anordnung nach Fig. 3 ausgedehnt werden auf Querfahrtlenkung, bei der die Räder 1 und 2 also stets parallel zueinander eingestellt sind, so müssen angesichts der linearen Übersetzung zwischen den Zahnrädern 7, 9 und 8, 10 auch die Spurarme 16 und 17 stets parallel laufen, was bedeutet, daß in diesem Fall zusätzliche Arme der Lenkhebel 13 und 14 oder wenigstens ein zusätzliche Arm, der parallel zum Spurarm des anderen Lenkhebels ist, vorhanden sein müssen, die alternativ zur Verbindung durch die Spurstange 20 über eine weitere Spurstange verbunden werden. Dem in Fig. 3 dargestellten Kreislenkprogramm und dem hier beschriebenen Querfahrtprogramm ist als einzige Stellung die Geradeausfahrt-Stellung gemeinsam. In dieser Stellung können dann die Spurstangen ausgetauscht werden. Es wäre auch möglich, einen oder beide der Spurarme 16 und 17 lösbar auf den jeweiligen Lenkhebelwellen 11 bzw. 12 zu montieren und zur Änderung des Lenkprogramms zu lösen und nach Parallelstellung mit einer Spurstange anderer Länge wieder miteinander zu verbinden.

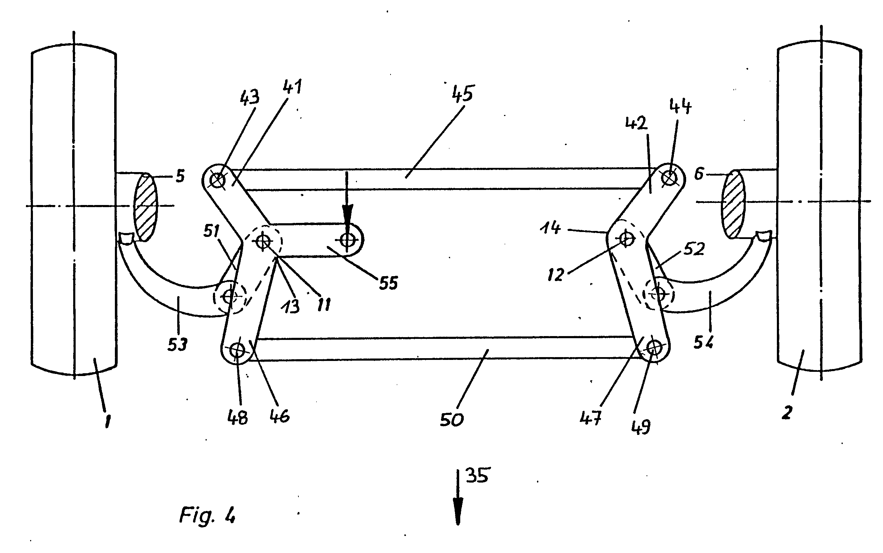

Fig. 4 zeigt eine Konstruktion, bei der an jeweiligen Spurarmen alternativ aktivierbare Spurstangen unterschiedlicher Länge sitzen. Die Konstruktion weist wiederum die Lenkhebel 13 und 14 mit den Lenkhebelwellen 11 bzw. 12 auf, auf denen Spurarme sitzen. Es handelt sich hierbei um Spurarme 41 und 42 mit Anlenklagern 43 bzw. 44, die im Quadranten 33 liegen und zwischen denen eine Spurstange 45 in Form eines teleskopartigen Spurzylinders verläuft. Weiterhin weisen die Lenkhebel 13 und 14 Spurarme 46 bzw. 47 auf, auf denen Anlenklager 48 und 49 angeordnet sind, zwischen denen eine ebenfalls als teleskopartiger Spurzylinder ausgebildete Spurstange 50 verläuft.

Die Lenkhebel 13 und 14 weisen noch jeweils einen Lenkarm 51 bzw. 52 auf, der über eine Schwinge 53 bzw. 54 an der Radstütze 5 bzw. 6 zu deren Verdrehung angreift. Der Lenkarm 51 und die Schwinge 53 bzw. der Lenkarm 52 und die Schwinge 54 könnten auch als Koppelgetriebe und die jeweilige Schwinge als Koppel bezeichnet werden. Diese Koppelgetriebe übersetzen den Drehwinkel der Lenkhebel unlinear auf den Drehwinkel der Radstütze und somit des Rads 1, 2. Sie wenden den Drehsinn nicht, die Räder 1, 2 verschwenken also in gleicher Drehrichtung, wenn auch um einen größeren Winkel, wie die Lenkhebel 11 bzw. 12.

Ein Lenkantriebsarm 55 dient der Aufnahme des Lenkbetätigungsantriebs.

Wie erläutert, können die Spurstangen 45 und 50 wahlweise starr oder zusammenschiebbar gemacht werden. Ist die Spurstange 45 starr und die Spurstange 50 zusammenschiebbar, so ergibt sich ein Lenkverhalten mit Kreislenkprogramm wie bei der Konstruktion nach Fig. 3. Die starre Länge der Spurstange 50 führt andererseits unter Berücksichtigung der Unlinearität der Koppelgetriebe 51, 53 und 52, 54 zu einem Querfahrtprogramm.

Im Gegensatz zum beschriebenen Querfahrtprogramm, das für lineare Verdrehungsübertragung und parallele Spurarme beschrieben wurde, divergieren bei progressiv unlinearer Verdrehungsübertragung wie derjenigen nach Fig. 4 und nicht wendender Übersetzung die Längsachsen der Spurarme 46 und 47 in Richtung zur Fahrzeugmitte 35. Die entsprechend unlineare Verdrehungsbeziehung der Drehhebel 13 und 14 muß der umgekehrten Unlinearität der Koppelgetriebe angepaßt sein, so daß in allen Schrägfahrstellungen ein möglichst niedriger Lenkfehler oder eine möglichst gute Parallelität der Räder die Folge sind. In den extremen Lenkstellungen liegen die Räder 1 und 2 parallel zu den Spurstangen, wie in der rechten Darstellung von Fig. 2 angedeutet ist.

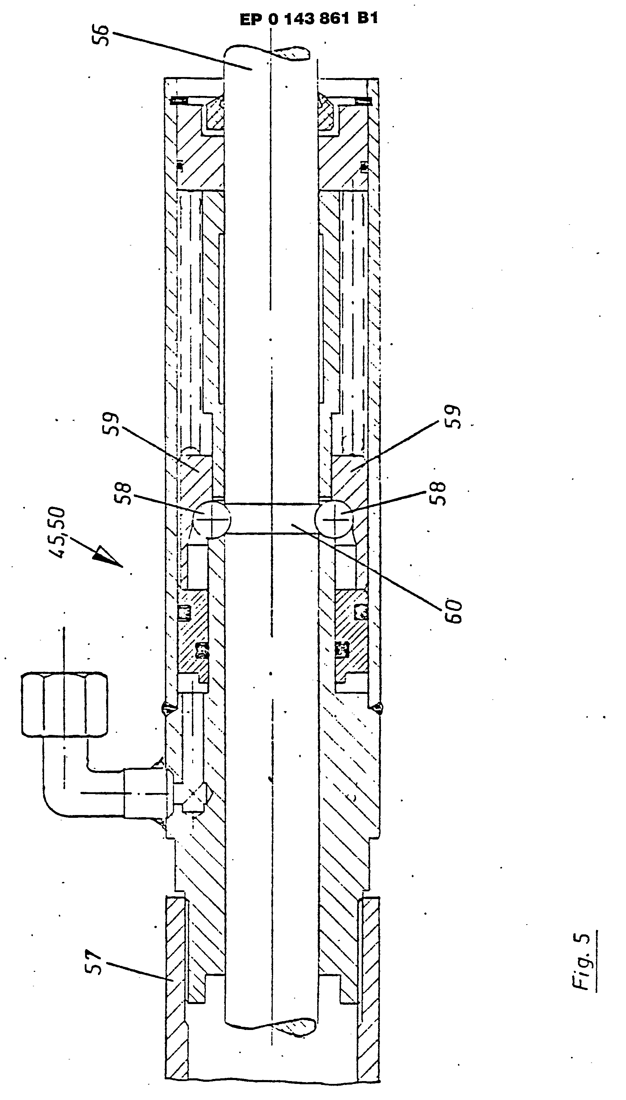

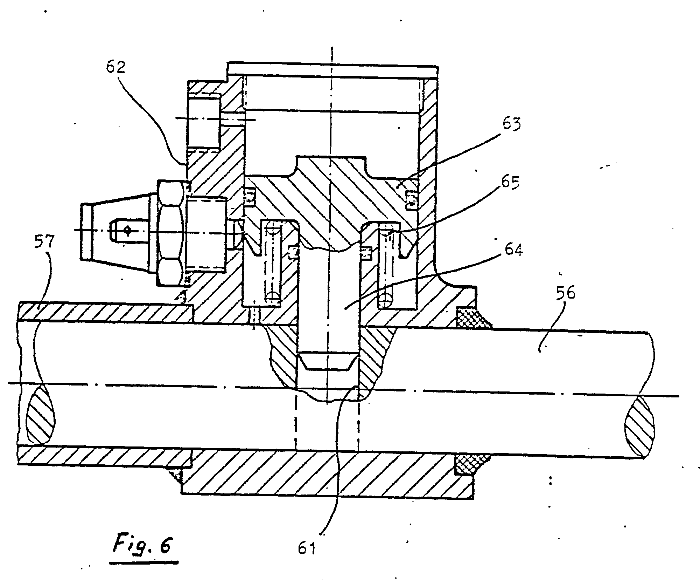

Die Fig. 5 und 6 zeigen Beispiele von durch Aktivierung in ihrer Länge festlegbaren und durch Desaktivierung teleskopisch « weich » machbaren Spurstangen. Die Spurstange nach Fig. 5 arbeitet nach Art einer hydraulischen Schnellkupplung und besteht aus einer Stange 56 und einem Teleskoprohr 57, die ineinander gesteckt sind und gegeneinander verriegelt oder entriegelt werden können. Der Verriegelung oder Entriegelung dienen Kugeln 58, die durch einen längsverschieblichen Zylinderbauteil 59 mit Innenkonus in eine um eine Umfangslinie der Stange 56 verlaufende flache Nut 60 eingedrückt werden können, wodurch die Verriegelung hergestellt ist. Der Zylinderbauteil 59 ist durch Federkraft in die Stellung gedrückt, in der die Stangen verriegelt sind, und kann unter Aufwand hydraulischen Drucks durch einen hydraulischen Ringkolben in die Freigabestellung zurückgeschoben werden. Durch die Axialkraft in der Stange 56 werden dann die Kugeln 58 aus der Nut 60 herausgedrückt. Wird der hydraulische Ansteuerdruck weggenommen, so kann die Verriegelung nicht in jeder momentan herrschenden Stellung erfolgen, sondern sie erfolgt erst, wenn die Spurstange durch die Verdrehung der Lenkhebel auf diejenige Länge gebracht worden ist, die der festzulegenden Spurstangenlänge entspricht, was in der Geradeausfahrt-Stellung der Fall ist. Da andererseits jederzeit entriegelt werden kann, so daß bei einer Umsteuerung zur Unzeit beide Spurstangen « weich » sein würden, ist die Umsteuerung durch eine entsprechende Verriegelung an den Betätigungsvorrichtungen auf die Stellung bei Geradeausfahrt beschränkt.

Fig. 6 zeigt eine alternative Konstruktion, bei der die Stange 56 von einer Bohrung 61 durchsetzt ist und am Ende des Teleskoprohrs 57 ein hydraulisches Verriegelungsschloß 62 mit einem Hydraulikkolben 63 und einer in die Bohrung 61 eintauchbaren Kolbenstange 64 sitzt. Der Kolben 63 wird bei dieser Ausführung durch eine Druckfeder 65 in die entriegelte Stellung gedrückt und durch hydraulischen Druck auf die der Kolbenstange gegenüberliegende Kolbenseite in die verriegelte Stellung verschoben. Bei einem Ausfall oder nach Abschalten der Hydraulik wird also die Spurstange weich und die Lenkung undefiniert, aber von außen am Rad oder durch Zug am Fahrzeug verstellbar, wie dies möglicherweise beim Manövrieren und Rangieren in der Halle gewünscht werden könnte. Soll indessen die Lenkung lieber bei Ausfall starr werden, so sind Hydraulikbaufschlagung und Druckfeder umgekehrt anzuordnen.

Als alternative Ausführungsform kämen auch reine Hydraulikzylinder in Frage, von denen der aktivierte unter Druck steht und der desaktivierte drucklos ist. Hierbei würde sich der aktivierte Zustand mit voller Länge durch den hydraulischen Druck von selbst einstellen, indessen erweist sich eine entsprechende Anlage als aufwendig.

Als weitere Alternative ist eine Kombination der Verriegelungskonstruktion nach Fig. 5 oder 6 und eines Hydraulikzylinders möglich in der Art, daß, ausgehend von der Konstruktion nach Fig. 5, die Stange 56 eine Kolbenstange eines im Teleskoprohr 57, der als Zylinder dient, verschiebbaren Hydraulikkolbens ausgebildet ist. Die Steuerung ist dann so ausgeführt, daß bei Ansteuerung der Verriegelung durch Wegnahme des entsprechenden hydraulischen Steuerdrucks zugleich ein — gegebenenfalls kurzzeitig aufgebrachter — Druck auf den Kolben wirkt, der die Spurstange auf die erforderliche Länge bringt.

Die Konstruktionen mit Hydraulikzylindern als Spurstangen setzen eine Dimensionierung voraus, gemäß der die « weiche » Spurstange nur kürzer sein kann, als sie in ihrem aktiviertem Zustand ist.

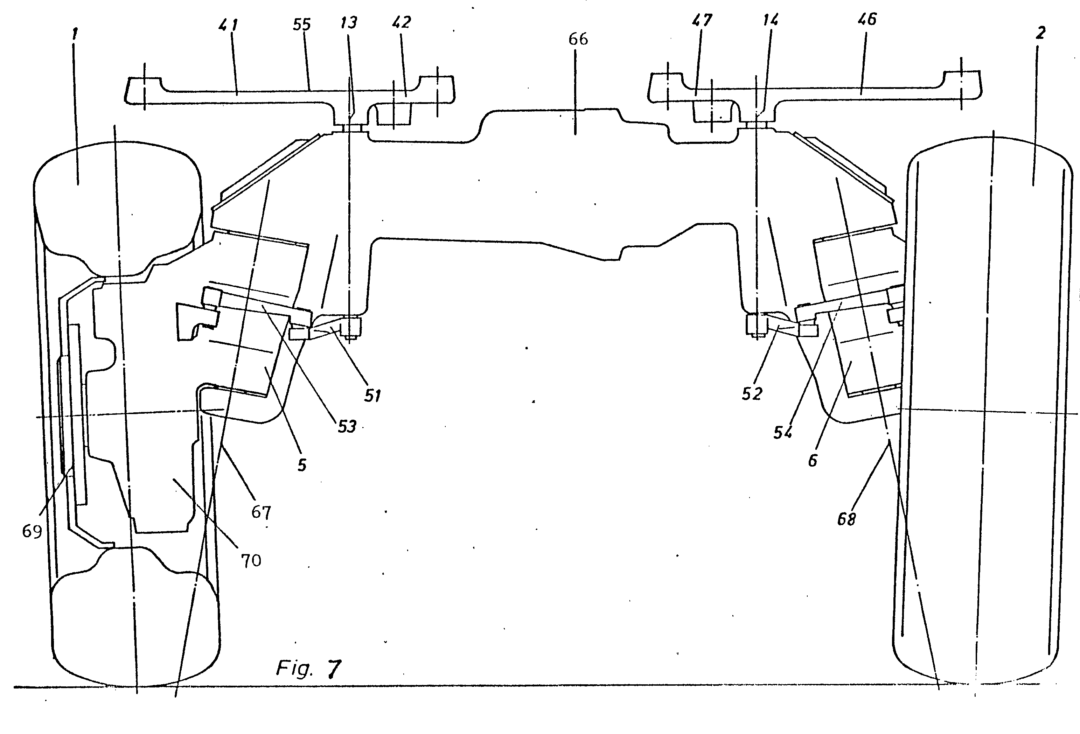

Bei der Konstruktion nach Fig. 4 verlaufen die Radstützen 5 und 6 schräg von oben in die Radschüssel. Eine entsprechende Konstruktion für ein Radpaar mit einem Achskörper ist in Fig. 7 dargestellt. Die Konstruktion umfaßt einen Achskörper 66, der in die Radstützen 5 und 6 übergeht. Die Radstützen 5 und 6 verlaufen schräg abwärts und sind um ihre schrägen Längsachsen 67 bzw. 68 verdrehbar. Im Achskörper 66 und in den Radstützen 5 und 6 sind Antriebsglieder gelagert, die den Antrieb bis zur jeweiligen Radnabe 69 übertragen. Wie in Fig. 7 links zu sehen ist, geht die Radstütze 5 unten in ein Radnabengehäuse 70 über, in dem ein (nicht sichtbarer) Achsbolzen des Rades 1 gelagert ist.

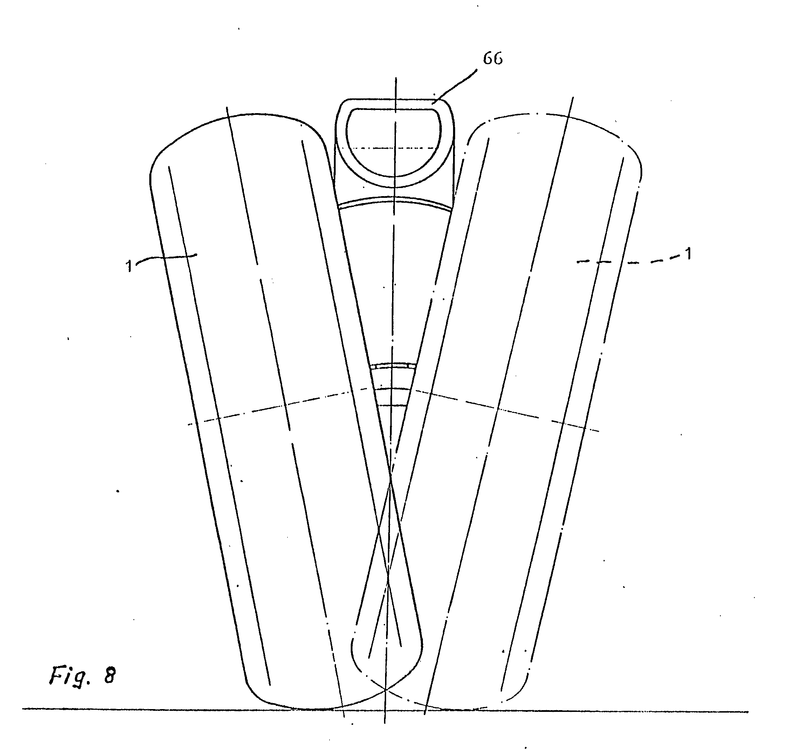

Der Achskörper 66 befindet sich in einer Höhe im Bereich des oberen Radrandes der Räder 1 und 2. Allgemein gesagt, befindet sich die Achskörpermitte zwischen der Höhe der Radoberkante und der Radmitte. Durch diese Konstruktion werden gleichzeitig eine hohe Bodenfreiheit und ein niedriger Fahrzeugschwerpunkt ermöglicht. Die in die Radschüsseln geführten schrägen Radstützen ermöglichen eine Verdrehung der Räder um 180° oder ein wenig mehr, wobei dann die Räder etwas schräg stehen und zwischen den Extremstellungen den Raum für den Achskörper 66 freilassen, wie in der Seitenansicht von Fig. 8 veranschaulicht ist. Dort sind die Räder in den beiden für die Querfahrt dienenden extremen Lenkstellungen dargestellt, obwohl zu einer Zeit das Rad nur eine dieser beiden Stellungen einnehmen kann.

Bei dieser Konstruktion sind die Lenkhebel 13 und 14 im Achskörper 66 gelagert. Zum Zweck einer geeigneten höhenmäßigen Verteilung sind die Spurarme 41, 42 bzw. 46, 47 und der Lenkantriebsarm 55 oberhalb des Achskörpers 66 angeordnet, während die Lenkarme 51, 52 und die Schwingen 53, 54 unterhalb des Achskörpers 61 angeordnet sind. Durch den Achskörper 66 hindurch verlaufen die Lenkhebelwellen.

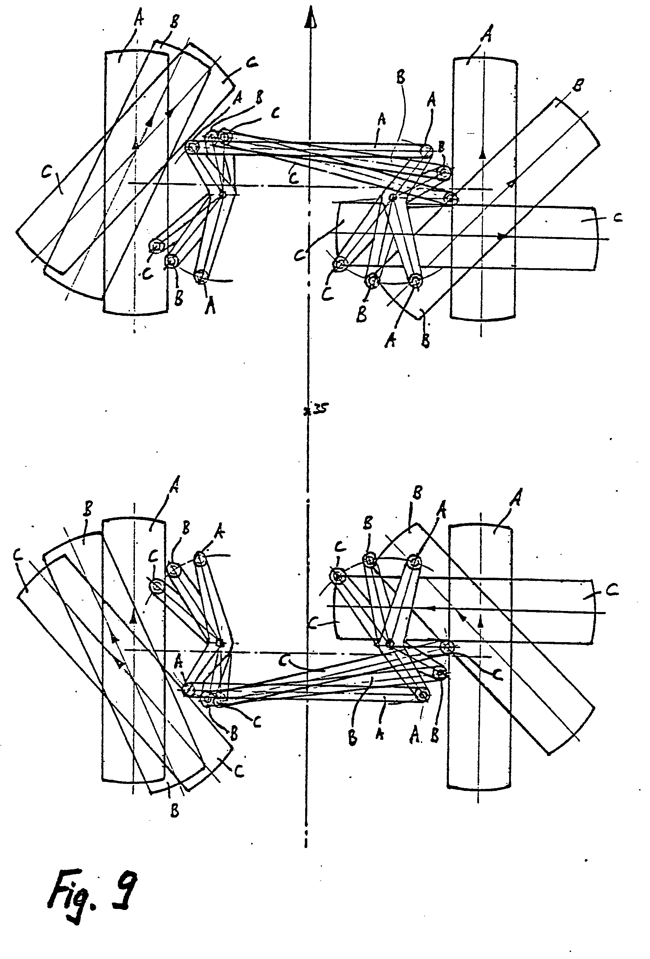

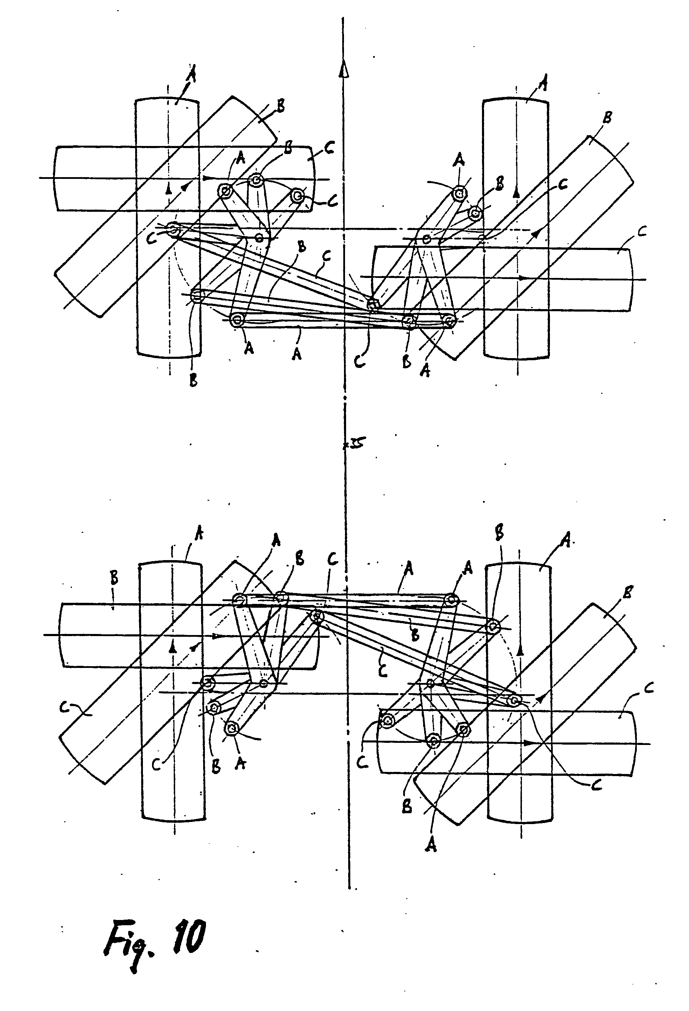

Für die Konstruktion nach den Figuren 7 und 8 zeigen die Figuren 9 und 10 Radstellungen für jeweils drei verschiedene Lenkeinschläge bei den Vorderrädern und den Hinterrädern, und zwar in Fig. 9 für Kreislenkung und in Fig. 10 für Schrägfahrtlenkung. Die Figuren zeigen jeweils Konstellationen A, B, und C. Fig. 9 zeigt hierbei verschiedene Stadien einer Rechtskurvenlenkung und Fig. 10 verschiedene Winkel einer Schrägfahrt nach rechts. Ersichtlich sind die Stellungen A für Geradeausfahrt für beide Programme gleich. Weiterhin ist ersichtlich, daß wegen der Schrägstellung der Radstützen die Räder bei Querfahrt, also bei den extremen Lenkeinschlägen im Schrägfahrtprogramm, nicht in einer gemeinsam Ebene liegen, sondern beiderseits einer quer verlaufenden Achsebene. Sie nähern sich hierbei im Bereich der Fahrzeug-Längsachse verhältnismäßig stark aneinander an, was bedeutet, daß bei dem Fahrzeug der Raum zwischen den Rädern mit Ausnahme des Achskörpers und der daran befestigten Lenkbetätigungsteile für die Radschwenkwinkel freibleiben soll.

Für den Lenkverdrehantrieb ist in Figuren 3 und 4 ein hydraulischer Linearmotor, also eine Kolben-Zylinder-Einheit, je Achse angegeben. Es kann auch eine Spurstange zwischen der Vorder- und Hinterachse eingeschaltet sein.

Es muß dann nur eine der Achsen mit einem Lenkantrieb versehen sein, der allerdings die Lenkkraft für alle vier Räder aufbringen muß.

Eine solche Lösung ist aber wenig zweckmäßig, da beim Umschalten der Lenkprogramme auch die Verdrehungsrichtung umgeschaltet werden muß. Die universellste Steuermöglichkeit und zugleich die Steuermöglichkeit mit den kleinsten Linearmotoreinheiten ergibt sich, wenn jeder Lenkhebel über einen eigenen Linearmotor verfügt.

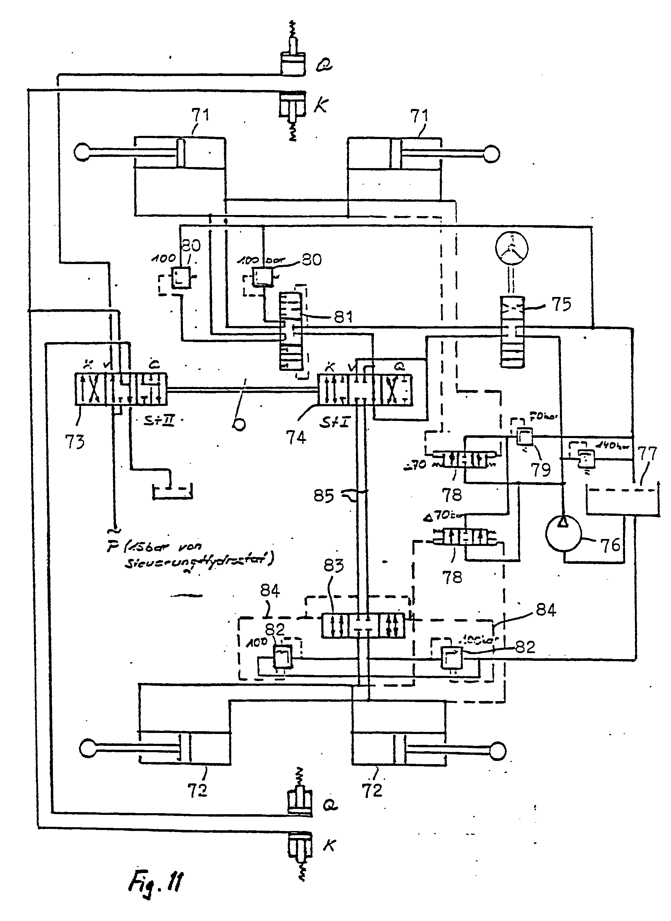

Fig. 11 veranschaulicht schematische eine Hydraulikanlage zur Lenksteuerung zur Verwendung bei Vierradlenkung und zwei Spurstangenzylindern je Achse. Der Lenkung dienen hydraulische Linearmotoren 71 und 72. Die Spurstangenzylinder sind hydraulisch sperrbar bzw. lösbar. Die Dimensionierung der Lenkeinrichtung mit den Lenkhebeln, Spurstangenzylindern usw. richtet sich nach den von den Linearmotoren aufgebrachten und aufgenommenen Kräften.

Die Linearmotoren 71 der Vorderachse und die Linearmotoren 72 der Hinterachse sind in Reihe geschaltet, wobei je nach Fahrtrichtung eine der Achsen angesteuert wird und die zweite Achse durch das verdrängte Ölvolumen der angesteuerten Achse nachgeführt wird. Für jeden Lenkhebel ist ein eigener Hydraulikzylinder vorhanden, wobei die Hydraulikzylinder der gleichen Achse parallelgeschaltet sind. Hierdurch kann sich die durch die Kinematik mit der Spurstange erzwungen Beziehung der Einschlagwinkel jeder Achse einstellen. Zwei gekoppelte Steuerventile 73, 74 dienen bei der Wahl des Fahrprogramms der Kopplung der Vorder- und Hinterradzylinder gleichsinnig oder überkreuz, oder der Trennung der Zylinder für die Straßenfahrt, bzw. der Ansteuerung der Spurstangenzylinder. In letzterer Funktion steuert das Steuerventil 73 einen Steuerdruck von 15 bar zur Betätigung der Zylinder der Spurstangenverriegelungen nach den Figuren 5 oder 6. Ein Steuerventil 75 wird zur Lenkbetätigung verstellt. Der Arbeitsdruck wird von einer hydraulischen Pumpe 76 aufgebracht, der Rücklauf erfolgt in einen Tank 77.

Wenn nun zur Ansteuerung einer Achse unter maximaler Last z. B. ein Druck von 70 bar erforderlich ist, muß bei zwei Achsen ein Versorgungsdruck von insgesamt 140 bar zur verfügung gestellt werden. Es ist dann jedoch möglich, daß unter ungünstigen Verhältnissen dieser Druck an nur einer Achse aufgebaut wird. Die Lenkungsteile müßten aus diesem Grunde für die hohen aus einem Druck von 140 bar resultierenden Kräfte dimensioniert sein, was der angestebten Kleinheit und der Freiheit des Raums für die Radverschwenkung entgegenwirkt. Um dies zu vermeiden, sind bei der beschriebenen Ausführung die Zylinder jeder Achse durch Differenzdruckventile 78 überbrückt. Diese Ventile sind im Normalzustand gesperrt und öffnen erst dann, wenn die Druckdifferenz zwischen den entsptechenden Zylinderanschlüssen 70 bar erreicht hat. Es ist also möglich, einen Gesamtdruck von 140 bar aufzubauen, aber nur dann, wenn die Druckdifferenz unter 70 bar bleibt. Damit beim Öffnen dieser Differenzdruckventile 78 zum Tank 77 hin der Druck im Lenksystem nicht zusammenbricht, ist ein Druckbegrenzungsventil 79 mit der Funktion eines Druckhalteventils von 70 bar zwischengeschaltet.

Um ein Verschieben der Räder durch die Einwirkung äußerer Kräfte zu vermeiden, sind Sperrblöcke mit nachgeschalteten Druckbegrenzungsventilen eingebaut, die bei Drucküberschreitung zum Tank zu entleeren. Diese Druckgebrenzungsventile müssen in der Druckeinstellung nun einerseits über dem Betriebsdruck der Achsen (70 bar), aber unter dem Gesamtdruck von 140 bar liegen. Beim beschriebenen Beispiel wurde ein Druck von 100 bar festgelegt. Dies entspricht zugleich der Dimensionierungskraft für die Lenkungsbauteile. Um trotzdem einen Druck von 140 bar aufbauen zu können, sind zwei alternative Schaltungen realisierbar, die in Fig. 11 einerseits für die Vorderachse und andererseits für die Hinterachse dargestellt sind :

1. Es sind 100-bar-Druckbegrenzungsventile 80 so eingeschaltet, daß sie nur im gesperrten Zustand eines Sperrschiebers 81 wirksam werden. Bei einer Ansteuerung der Zylinder 71 wird der Sperrschieber 81 verschoben und werden die Ventile 80 von der Druckseite abgetrennt.

2. Es sind Druckbegrenzungsventile 82 in der üblichen Weise zwischen die Zylinder 72 und einen Sperrschieber 83 geschaltet, jedoch zusätzlich auf der federbelasteten Seite mit einer Steuerleitung 84 zur druckführenden Zuleitung 85 versehen. Bei einer Ansteuerung der Achse steht also der Ansteuerdruck zusätzlich zum Federdruck an, so daß in diesem Falle das Ventil nicht bei 100 bar öffnen kann.

Die für die Lenkungsbauteile im Bereich zwischen den im Extremeinschlag befindlichen Rädern erforderliche minimale Baugröße wird durch mäßigen Kräfte, für die sie dimensioniert sind, ermöglicht.

## Patentansprüche

1. Fahrzeug mit lenkbaren Rädern (1, 2) die paarweise auf einer quer zur Geradeaus-Fahrtrichtung verlaufenden Achse angeordnet sind, und die an Radstützen (5, 6) gelagert sind, welche über daran angelenkte Schwingen (53, 54) mit Lenkarmen (51, 52) gekoppelt sind, die ihrerseits an um ortsfeste Lenkhebelwellen (11, 12) schwenkbaren Spurarmen (41, 42 ; 46, 47) angreifen, wobei jeweils zwei einander gegenüberliegende Spurarme eines Räderpaars mittels einer Spurstange (45, 50) gelenkig verbunden sind, dadurch gekennzeichnet, daß jedem Rad (1, 2) zwei Spurarme (41, 46 ; 42, 47) zugeordnet sind und daß die einander entsprechenden jeweils mittels einer Spurstange (45, 50) verbunden sind, und daß die beiden Spurstangen (45, 50) alternativ entweder mit maximal gestreckter Länge als starre Verbindung oder als teleskopisch verkürzbare Verbindung einstellbar sind, wobei je nach Wahl der starren Spurstange die Fahrzeuglenkung entweder auf Kreisfahrt oder auf Querfahrt schaltbar ist.

2. Fahrzeug nach Anspruch 1, dadurch gekennzeichnet, daß in die Spurstangen (45, 50) Hydraulikzylinder eingesetzt sind, von denen alternativ einer unter Druck, der andere drucklos steuerbar ist.

3. Fahrzeug nach Anspruch 1 oder 2, dadurch gekennzeichnet, daß als Verbindungen zwischen den Anlenklagern (43, 44, 48, 49) Spurstangen (45, 50) dienen, die aus zwei zusammenschiebbaren Teilen (56, 57) bestehen, die jeweils in einer Stellung miteinander verriegelbar sind.

4. Fahrzeug nach Anspruch 3, dadurch gekennzeichnet, daß die Spurstangen (45, 50) nach Art einer hydraulischen Schnellkupplung arbeitende Spurstangenzylinder sind, die mechanisch verriegelbar und hydraulisch entriegelbar sind.

5. Fahrzeug nach einem der Ansprüche 1 bis 4, dadurch gekennzeichnet, daß jeweils auf einer der Achslinien angeordnete lenkbare Räder (1, 2) an einem gemeinsamen Achskörper (61) sitzen, an dem die Lenkhebel (13, 14) gelagert sind.

6. Fahrzeug nach Anspruch 5, dadurch gekennzeichnet, daß die Anlenkung der Spurstangen (45, 50) an den Lenkhebeln (13, 14) oberhalb des Achskörpers (61) und die Vorrichtungen (51-54) zur Übersetzung vom Lenkhebel auf die Radstützen (5, 6) unterhalb des Achskörpers vorgesehen sind.

7. Fahrzeug nach einem der Ansprüche 1 bis 6, dadurch gekennzeichnet, daß jeder Lenkhebel (13, 14) noch ein Anlenklager zum Angriff der Kolbenstange (21) eines hydraulischen Betätigungszylinders (22) oder eines Lenkgestänges aufweist.

8. Fahrzeug nach einem der Ansprüche 1 bis 7, dadurch gekennzeichnet, daß bei hydraulischer Lenkbetätigung mit Lenkzylindern (71) zwischen die Zylinderseiten und einen Abfluß (77) Druckbegrenzungsventile (80) über Sperrschieber (81) geschaltet sind, die nur bei nicht angesteuerten Lenkzylindern auf Druchlaß gesteuert sind.

9. Fahrzeug nach einem der Ansprüche 1 bis 8, dadurch gekennzeichnet, daß bei hydraulischer Lenkbetätigung mit Lenkzylindern (72) zwischen die Zylinderseiten und einen Abfluß (77) Druckbegrenzungsventile (82) mit Ventilschiebern geschaltet sind, deren dem Zylinderdruck entgegengesetzte Seite an die Ansteuerleitung (84) des jeweiligen Lenkzylinders angeschlossen ist (über 84).

## Claims

1. Vehicle with steerable wheels (1, 2) which are arranged in pairs on an axle extending transversely to the straight-ahead direction of travel and which are mounted on wheel braces (5, 6), which are connected by way of rocker arms (53, 54) pivoted thereon, to steering arms (51, 52) which in turn engage on track arms (41, 41 ; 46, 47) able to pivot about stationary steering lever shafts (11, 12), two opposing track arms of a pair of wheels respectively being pivotally connected by means of a track rod (45, 50), characterised in that associated with each wheel (1, 2) are two track arms (41, 46 ; 42, 47) and that the corresponding track arms are respectively connected by means of a track rod (45, 50) and that the two track rods (45, 50) are adjustable alternately either with a maximum elongated length as a rigid connection or as a connection which can be shortened telescopically depending on the choice of the rigid track rod, the vehicle steering being able to be switched either to circular travel or to transverse travel.

2. Vehicle according to Claim 1, characterised in that incorporated in the track rods (45, 50) are hydraulic cylinders, of which alternately one is controllable under pressure, the other is controllable without pressure.

3. Vehicle according to Claim 1 or 2, characterised in that serving as connections between the pivots (43, 44, 48, 49) are track rods (45, 50), which consist of two telescopic parts (56, 57), which can be locked one to the other respectively in one position.

4. Vehicle according to Claim 3, characterised in that the track rods (45, 50) are track rod cylinders operating in the manner of a hydraulic quick-acting coupling, which can be locked mechanically and unlocked hydraulically.

5. Vehicle according to one of Claims 1 to 4, characterised in that steerable wheels (1, 2) disposed respectively on one of the axle lines are seated on a common axle body (61), on which the steering levers (13, 14) are mounted.

6. Vehicle according to Claim 5, characterised in that the pivot points of the track rods (45, 50) on the steering levers (13, 14) are provided above the axle body (61) and the apparatus (51-54) for transmission from the steering levers to the wheel braces (5, 6) are provided below the axle body.

7. Vehicle according to one of Claims 1 to 6, characterised in that each steering lever (13, 14) also comprises a pivot point for the engagement of the piston rod (21) of a hydraulic actuating cylinder (22) or a steering linkage.

8. Vehicle according to one of Claims 1 to 7, characterised in that in the case of hydraulic steering actuation with steering cylinders (71), pressure-limiting valves (80) are connected by way of blocking slide valves (81) between the sides of the cylinders and a drain (77), which slide valves are open solely when the steering cylinders are not controlled.

9. Vehicle according to one of Claims 1 to 8, characterised in that in the case of hydraulic steering actuation with steering cylinders (72), connected between the sides of the cylinders and a drain (77) are pressure-limiting valves (82) with valve actuators, whereof the side opposed to the cylinder pressure is connected to the control conduit (84) of the respective steering cylinder (by way of 84).

**Revendications**

1. Véhicule comprenant des roues orientables (1, 2) qui sont disposées par paires sur un axe s'étendant perpendiculairement à la direction de marche avant et qui sont montées tournantes sur des supports de roues (5, 6), lesquels sont accouplés par des bielles (53, 54) articulées sur eux à des bras de commande de direction (51, 52) qui, à leur tour, attaquent des bras d'accouplement (41, 42 ; 46, 47) pivotant autour d'arbres de leviers de commande fixes (11, 12), deux bras d'accouplement disposés l'un en face de l'autre d'une paire de roues étant à chaque fois reliés de manière articulée par une barre d'accouplement (45, 50), caractérisé par le fait que deux bras d'accouplement (41, 46 ; 42, 47) sont associés à chaque roue (1, 2) et que ceux qui se correspondent entre eux sont à chaque fois reliés au moyen d'une barre d'accouplement (45, 50), et par le fait que les deux barres d'accouplement (45, 50) peuvent être alternativement utilisées, soit comme une liaison rigide avec une longueur d'extension maximale, soit comme une liaison pouvant être raccourcie de manière télescopique, cependant que, lorsque l'on choisit la barre d'accouplement rigide, la direction du véhicule peut être commutée sur la marche circulaire ou la marche transversale.

2. Véhicule selon la revendication 1, caractérisé par le fait que des vérins hydrauliques sont montés dans les barres d'accouplement (45, 50), et qu'ils peuvent être commandés alternativement pour que l'un soit sous pression et l'autre non.

3. Véhicule selon la revendication 1 ou 2, caractérisé par le fait que l'on utilise comme liaison entre les paliers d'articulation (43, 44, 48, 49) des barres d'accouplement (45, 50) se composant de deux parties emboîtables (56, 57) qui peuvent être à chaque fois verrouillées l'une par rapport à l'autre dans une position.

4. Véhicule selon la revendication 3, caractérisé par le fait que les barres d'accouplement (45, 50) sont des vérins de barres d'accouplement qui fonctionnent à la manière d'un accouplement rapide et qui peuvent être verrouillées mécaniquement et déverrouillées hydrauliquement.

5. Véhicule selon l'une des revendications 1 à 4, caractérisé par le fait que des roues orientables (1, 2) disposées à chaque fois sur l'une des lignes d'axe sont montées sur un corps d'essieu commun (61) sur lequel les leviers de commande (13, 14) sont montés tournants.

6. Véhicule selon la revendication 5, caractérisé par le fait que l'articulation des barres d'accouplement (45, 50) sur les leviers de commande (13, 14) est prévue au-dessus du corps d'essieu (61) et que les dispositifs (51-54) de transmission du mouvement du levier de commande aux supports de roues (5, 6) sont prévus au-dessous du corps d'essieu.

7. Véhicule selon l'une des revendications 1 à 6, caractérisé par le fait que chaque levier de commande (13, 14) comporte en outre un palier d'articulation qu'attaque la tige de piston (21) d'un vérin hydraulique d'actionnement (22) ou d'une timonerie de direction.

8. Véhicule selon l'une des revendications 1 à 7, caractérisé par le fait que, dans le cas de l'actionnement hydraulique de la direction au moyen de vérins de commande de direction (71), des clapets de limitation de la pression (80) sont montés entre les côtés des vérins et un écoulement (77), avec interposition de registres d'arrêt (81), qui ne laissent passer le fluide que lorsque les vérins de commande de direction ne sont pas actionnés.

9. Véhicule selon l'une des revendications 1 à 8, caractérisé par le fait que, dans le cas de l'actionnement hydraulique de la direction au moyen de vérins de commande de direction (72), des clapets de limitation de la pression (82) avec des registres d'arrêt sont montés entre les côtés des vérins et un écoulement (77), le côté opposé à la pression du vérin étant relié (par 84) au conduit de commande (84) du vérin de commande de la direction correspondant.

Fig. 1

Fig. 2

Fig. 3

Fig. 4

57    45,50    58    59    56

58    59

60

Fig. 5

EP 0 143 861 B1

Fig. 6

Fig. 7

Fig. 8

Fig. 9

Fig. 10

9

Fig. 11